# EUROPEAN PATENT APPLICATION

(11) **EP 4 729 713 A2**
(43) Date of publication of application: **22.04.2026**
(21) Application number: 25207761.5
(22) Date of filing: 09.10.2025
(51) Int. Cl.: E04F 11/00, B65G 69/30

(54) **HINGE SYSTEM**

(30) Priority: 15.10.2024 GB 202415158
(71) Applicant: Enable Access (Holdings) Limited, Leighton Buzzard LU7 4UH (GB)
(72) Inventor: MORRISH, Gerald David, Leighton Buzzard, LU7 4UH (GB)
(74) Representative: Mewburn Ellis LLP

(57) **Abstract**

A hinge system for a foldable ramp, the hinge system comprising: a hinge body comprising a first hinge element, a second hinge element and a bridge portion interposed between the hinge elements; a first ramp connector comprising a first channel and a first engagement portion; and a second ramp connector comprising a second channel and a second engagement portion; wherein the hinge body is interposed between the ramp connectors with the first hinge element pivotably received in the first channel and the second hinge element pivotably received in the second channel such that the hinge system is pivotable between an unfolded configuration and a folded configuration.

## Description

### FIELD

The present disclosure relates to a hinge system for a foldable ramp and to a foldable ramp having such a hinge system.

### BACKGROUND

It is known to use ramps to facilitate access (e.g. for people in wheelchairs, people with mobility impairments, or people pushing pushchairs/prams) into buildings having one or more steps at the entrance. It is also known to use ramps to facilitate access (e.g. for people in wheelchairs, and/or for people with goods on trolleys) into the back of vehicles. Some ramps are foldable to facilitate storage and/or transport. Foldable ramps typically comprise two opposing ramp panels each pivotably connected to a hinge body. In use, the foldable ramp is unfolded such that the ramp panels are coplanar to allow a user to traverse the ramp.

A problem with such foldable ramps is that the ramp panels may move from their coplanar position when a user moves over them. This instability may be unnerving for the user and may jeopardize user safety.

The present disclosure has been realised in light of the above considerations.

### SUMMARY

In a first aspect, there is provided a hinge system for a foldable ramp, the hinge system comprising:
a hinge body comprising a first hinge element, a second hinge element and a bridge portion interposed between the hinge elements;
a first ramp connector comprising a first channel and a first engagement portion; and
a second ramp connector comprising a second channel and a second engagement portion;
wherein the hinge body is interposed between the ramp connectors with the first hinge element pivotably received in the first channel and the second hinge element pivotably received in the second channel such that the hinge system is pivotable between an unfolded configuration and a folded configuration;
wherein the hinge body further comprises a stabiliser portion depending from the bridge portion, the stabiliser portion comprising a first stabiliser element and a second stabiliser element such that, in the unfolded configuration, the first stabiliser element engages with the first engagement portion and the second stabiliser element engages with the second engagement portion to restrict relative translational movement of the ramp connectors.

By providing first and second stabiliser elements which respectively engage with first and second ramp connectors in the unfolded configuration to restrict relative translational movement of the first and second ramp connectors, there is a reduction in the likelihood of a foldable ramp utilising the hinge system from becoming unstable. This improves user safety and user experience.

Optional features will now be described. These are applicable singly or in any combination with any aspect.

The hinge system may have a longitudinal axis (e.g. the hinge system may be elongate). The hinge body may include a central plane aligned with the longitudinal axis and orientated such that the hinge elements are on opposing sides of the central plane. The hinge body may be symmetric about the central plane. A transverse direction of the hinge system is perpendicular to the central plane.

Each ramp connector and any part of each ramp connector may extend (e.g. be extruded/pultruded/rolled) in the longitudinal direction. For example, the first and/or second channels, and/or the first and/or second engagement portions may extend in the longitudinal direction. The hinge body and any part of the hinge body may extend (e.g. be extruded/pultruded/rolled) in the longitudinal direction. For example, the stabiliser portion, the first and/or second hinge elements, and/or the first and/or second stabiliser elements may extend (e.g. be extruded/pultruded/rolled) in the longitudinal direction.

The first stabiliser element may comprise an upper part and a lower part. In the unfolded configuration, the upper part of the first stabiliser element may engage with (e.g. abut) the first engagement portion proximal the first hinge element and/or the lower part of the first stabiliser element may engage with (e.g. abut) the first engagement portion distal the first hinge element. The second stabiliser element may comprise an upper part and a lower part. In the unfolded configuration, the upper part of the second stabiliser element may engage with (e.g. abut) the second engagement portion proximal the second hinge element and/or the lower part of the second stabiliser element may engage with (e.g. abut) the second engagement portion distal the second hinge element.

In the unfolded configuration, the first engagement portion may conform to the first stabiliser element (e.g. such that the first engagement portion and the first stabiliser element have matching transverse profiles) and/or the second engagement portion may conform to the second stabiliser element (e.g. such that the second engagement portion and the second stabiliser element have matching transverse profiles).

The first stabiliser element may be one of convex or concave and the first engagement portion may be the other of convex or concave. The second stabiliser element may be convex or concave and the second engagement portion may be the other of convex or concave. In these ways, respective engagement between the stabiliser elements and the ramp connectors may be facilitated.

The first engagement portion may comprise a first recess/undercut or a first protrusion and the first stabiliser element may comprise the other of a first recess/undercut or a first protrusion. In the unfolded configuration, the first protrusion may engage with the first recess/undercut to restrict translational movement (e.g. up/down movement in use) of the first ramp connector.

The second engagement portion may comprise a second recess/undercut or a second protrusion and the second stabiliser element may comprise the other of a second recess/undercut or a second protrusion. In the unfolded configuration, the second protrusion may engage with the second recess/undercut to restrict translational movement (e.g. up/down movement in use) of the second ramp connector.

The stabiliser portion may comprise a first spacer portion and a second spacer portion (e.g. the first spacer portion may be transversely spaced from the second spacer portion). The first spacer portion may be interposed between (e.g. connect) the bridge portion and the first stabiliser element. The second spacer portion may be interposed between (e.g. connect) the bridge portion and the second stabiliser element. The first spacer portion may be recessed (e.g. towards the central plane) relative to the first stabiliser portion. The second spacer portion may be recessed (e.g. towards the central plane) relative to the second stabiliser portion. The first spacer portion may have a curved (e.g. arcuate) profile in the transverse direction. The second space portion may have a curved (e.g. arcuate) profile in the transverse direction.

The stabiliser portion may comprise a base portion interposed between (e.g. connecting) the first stabiliser element and the second stabiliser element (e.g. distal the bridge portion). The base portion may oppose the bridge portion (e.g. in a vertical direction perpendicular to the longitudinal and transverse directions). The first engagement portion may comprise a lower part. The second engagement portion may comprise a lower part. In the unfolded configuration, the lower part of the first engagement portion and/or the lower part of the second engagement portion may engage with the base portion (e.g. to further stabilise the hinge system).

The stabiliser portion may have a depth dimension (e.g. in a vertical direction perpendicular to the longitudinal and transverse directions of the hinge body) that is less than the depth dimension of each ramp connector so that the stabiliser portion is located entirely within a space defined between the ramp connectors (e.g. the stabiliser portion does not extend past the ramp connectors in the vertical direction).

The first stabiliser element may extend beyond the bridge portion in a first transverse direction (e.g. perpendicular to the central plane). The second stabiliser element may extend beyond the bridge portion in a second transverse direction (e.g. perpendicular to the central plane). The first transverse direction and the second transverse direction being opposite to one another (e.g. mirrored about the central plane).

The stabiliser portion (e.g. the base portion) may be configured to receive a handle (e.g. the stabiliser portion may comprise a handle holder). Thus, the hinge system may comprise a handle attached to the stabiliser portion (e.g. the base portion). In the unfolded configuration, the handle holder may be located between the first and second ramp connector.

The bridge portion may comprise a first connector portion (e.g. connected to the first hinge element) and a second connector portion (e.g. connected to the second hinge element). The bridge portion may comprise a central portion interposed between the first connector portion and the second connector portion. The first connector portion, the second connector portion and/or the central portion may have a planar profile in the transverse direction.

The first connector portion may depend (e.g. downwardly and/or outwardly) from the central portion towards the stabiliser portion (e.g. the first stabiliser element) at a first obtuse angle. The second connector portion may depend (e.g. downwardly and/or outwardly) from the central portion towards the stabiliser portion (e.g. the second stabiliser element) at a second obtuse angle. The first obtuse angle and the second obtuse angle may be the same. The obtuse angles may range from 95 to 160 degrees (e.g. from 110 to 150 degrees) (e.g. may be substantially 135 degrees).

The first ramp connector may comprise a first channel outer wall and a first channel inner wall (e.g. collectively defining the first channel). The first engagement portion may depend downwardly from where the first channel inner wall joins the first channel outer wall. Each first channel wall may have a curved (e.g. arcuate) profile in the transverse direction and/or may be integrally formed with the first engagement portion.

The second ramp connector may comprise a second channel outer wall and a second channel inner wall (e.g. collectively defining the second channel). The second engagement portion may depend downwardly from where the second channel inner wall joints the second channel outer wall. Each second channel wall may have a curved (e.g. arcuate) profile in the transverse direction and/or may be integrally formed with the second engagement portion.

In the unfolded configuration, the first ramp connector (e.g. the first channel outer wall) may engage with and/or conform to the first spacer portion. In the unfolded configuration, the second ramp connector (e.g. the second channel outer wall) may engage with and/or conform to the second spacer portion. This engagement may further stabilise the ramp connectors.

The hinge body may comprise a first cavity (e.g. having an arcuate profile in the transverse direction) for receiving the first channel outer wall. The first cavity may be defined by the first spacer portion and/or the first hinge element. The first channel outer wall may slide and/or rotate into the first cavity. The hinge body may comprise a second (e.g. arcuate) cavity for receiving the second channel outer wall. The second cavity may be defined by the second spacer portion and/or the second hinge element. The second channel outer wall may slide and/or rotate into the second cavity. In these ways, stability of the hinge system in the unfolded configuration may be improved (e.g. reducing the likelihood of relative movement of the ramp connectors).

In the unfolded configuration, the first engagement portion and the first channel outer wall may collectively engage with (e.g. conform to and/or continuously contact/abut) the first ramp connector from the bridge portion to the base portion on a first side of the hinge body. In the unfolded configuration, the second engagement portion and the second channel outer wall may collectively engage with (e.g. conform to and/or continuously contact/abut) the second ramp connector from the bridge portion to the base portion on a second side of the hinge body.

The first ramp connector may comprise a first slot for receiving a first ramp panel. The second ramp connector may comprise a second slot for receiving a second ramp panel. In the unfolded configuration, the ramp connectors may be orientated such that the first slot and the second slot open in opposite directions (e.g. in use, a first ramp panel and a second ramp panel would be coplanar). In the folded configuration, the ramp connectors may be orientated such that the first slot and the second slot open in the same direction (e.g. in use, a first ramp panel and a second ramp panel would face each other). The ramp panels may be configured such that a user can traverse them in the unfolded configuration (e.g. the ramp panels may be coplanar). The first ramp panel may be integrally formed with the first ramp connector. The second ramp panel may be integrally formed with the second ramp connector.

The first slot may comprise a first stopping element (e.g. to limit the degree of insertion of a first ramp panel into the first slot). The first stopping element may comprise a first upper stopping rib (e.g. on an upper first slot-defining surface) and/or may comprise a first lower stopping rib (e.g. on a lower first slot-defining surface). The second slot may comprise a second stopping element (e.g. to limit the degree of insertion of a second ramp panel into the second slot). The second stopping element may comprise a second upper stopping rib (e.g. on an upper second slot-defining surface) and/or may comprise a second lower stopping rib (e.g. on a lower second slot-defining surface).

A first offset between the first stopping element and the first engagement portion may be different to a second offset between the second stopping element and the second engagement portion. In this way, in the folded configuration, an edge of a first ramp panel distal the hinge body may be offset from an edge of a second ramp panel distal the hinge body thereby facilitating compactness of a foldable ramp implementing the hinge system. In other words, this transverse off-setting of the stopping elements means that any ramp panels (e.g. having the same transverse dimension) connected to the ramp connectors are also transversely off-set in the folded configuration so that any kerbs on the outer transverse edges of the ramp panels can be off-set and nested thereby increasing compactness and thus portability.

The first ramp connector may comprise a first upper portion and a first lower portion (e.g. substantially parallel to the first upper portion). The first upper portion and the first lower portion may collectively define the first slot and/or may each have a planar profile in the transverse direction. The first channel outer wall may be located between (e.g. connect) and/or integrally formed with the first upper portion and the first engagement portion. The first engagement portion may be located between (e.g. connect) and/or integrally formed with the first lower portion and the first channel outer wall. The first upper portion may comprise a first ridged portion. The first ridged portion may comprise a series of longitudinally-extending, transversely spaced first ridges.

The second ramp connector may comprise a second upper portion and a second lower portion (e.g. substantially parallel to the second upper portion). The second upper portion and the second lower portion may collectively define the second slot and/or may each have a planar profile in the transverse direction. The second channel outer wall may be located between (e.g. connect) and/or integrally formed with the second upper portion and the second engagement portion. The second engagement portion may be located between (e.g. connect) and/or integrally formed with the second lower portion and the second channel outer wall. The second upper portion may comprise a second ridged portion. The second ridged portion may comprise a series of longitudinally-extending, transversely spaced second ridges.

The first ramp connector (e.g. any constituent components) may be integrally formed (e.g. of glass reinforced plastic (GRP) and/or metal, e.g. aluminium, steel). The second ramp connector (e.g. any constituent components) may be integrally formed (e.g. of glass reinforced plastic (GRP) and/or metal, e.g. aluminium, steel). The hinge body (e.g. any constituent components) may be integrally formed (e.g. of glass reinforced plastic (GRP) and/or metal, e.g. aluminium, steel).

In the folded configuration, the ramp connectors (e.g. slot openings) point in the same direction (e.g. the upper portions face each other). In other words, in the folded configuration, the upper portions lie in parallel planes spaced from each other in a direction that is perpendicular to both the longitudinal and transverse dimensions of the channels. In the unfolded configuration, the ramp connectors (e.g. slot openings) point in opposite directions (e.g. such that the first upper portion and the second upper portion may both be coplanar with one another and may also be coplanar the central portion of the hinge body).

In a second aspect, there is provided a foldable ramp for facilitating movement between two positions of unequal height, the foldable ramp comprising:
a first ramp panel having a first inner transverse edge;
a second ramp panel having a second inner transverse edge; and
a hinge system according to the first aspect interposed between the first and second inner transverse edges with the first slot of the first ramp connector connected to or integral with the first ramp panel and the second slot of the second ramp connector connected to or integral with the second ramp panel.

The first inner transverse edge may be received by the first slot of the first ramp connector of the hinge system. The second inner transverse edge may be received by the second slot of the second ramp connector of the hinge system. The first ramp panel may comprise a first ramp surface (i.e. the surface over which the user travels in use). The first ramp surface may comprise a first ridged portion. The second ramp panel may comprise a second ramp surface (i.e. the surface over which the user travels in use). The second ramp surface may comprise a second ridged portion. The first ridged portion and/or the second ridged portion may each comprise a series of transversely-extending, longitudinally spaced ridges (perpendicular to the direction of travel of the user on the ramp).

The first ramp panel may comprise a first outer transverse edge. The first ramp panel may comprise a first kerb (e.g. integrally formed with the first ramp panel). Alternatively, the first kerb may be connected to the first outer edge of the first ramp panel. The first kerb may have a first kerb portion upstanding perpendicularly from the first ramp surface and a first kerb connector for connecting to the first outer edge. The first kerb connector may comprise a first kerb recess (e.g. longitudinally-extending) for receiving the first outer transverse edge.

The second ramp panel may comprise a second outer transverse edge. The second ramp panel may comprise a second kerb (e.g. integrally formed with the second ramp panel). Alternatively, the second kerb may be connected to the second outer edge of the second ramp panel. The second kerb may have a second kerb portion upstanding perpendicularly from the second ramp surface and a second kerb connector for connecting to the second outer edge. The second kerb connector may comprise a second kerb recess (e.g. longitudinally-extending) for receiving the second outer transverse edge.

The first and/or the second ramp panel may each have longitudinally spaced lateral edges. The lateral edges may each be provided with an inclined lip portion extending downwards in an in-use depth direction (e.g. to facilitate a user traversing on/off the foldable ramp in use).

In the unfolded configuration: the ramp panels may be coplanar with the hinge body (e.g. the central portion) of the hinge system; and/or the kerb portions of the kerbs may be substantially parallel and transversely offset such that they face each other.

In the folded configuration: the ramp panels may be substantially parallel and transversely off-set; the ramp surfaces may face each other; the inner transverse edges of the ramp panels may be transversely off-set; the outer transverse edges of the ramp panels may be transversely off-set; and/or the kerb portions of the kerbs may be substantially parallel and transversely offset such that they nest against each other.

In a third aspect, there is provided a kit of parts comprising:
the hinge system according to the first aspect and two ramp panels as described above for the second aspect.

In some embodiments, the kit further comprises two kerbs, each attachable to the outer transverse edge of the respective ramp panel. In some embodiments, the kit further comprises a handle attachable to a handle holder of the hinge system.

In some embodiments, the handle may comprise a handle grip portion interposed between handle webs. The handle grip portion may be formed a plastics material e.g. a hard plastics material. The handle webs may be flexible webs e.g. formed of a woven textile material. The handle webs may be for insertion within and gripping by the gripping portion of the handle holder.

In a fourth aspect, there is provided a method of manufacturing the foldable ramp of the second aspect, the method comprising the steps of:
providing (e.g. manufacturing) a first ramp panel;
providing (e.g. manufacturing) a second ramp panel;
providing a hinge system according to the first aspect;
fitting the first edge of the first ramp panel into the first slot of the first ramp connector;
fitting the second edge of the second ramp panel into the second slot of the second ramp connector;
fitting the first hinge element into the first channel of the first ramp connector; and
fitting the second hinge element into the second channel of the second ramp connector.

The method may include manufacturing the ramp panels (e.g. ramp panels as described above for the second aspect) using the same manufacturing equipment, e.g. the same extrusion die. The ramp panels may be manufactured as a multiple (e.g. double length panel that is then cut into two (or more) ramp panels).

The method may include manufacturing the hinge body (e.g. manufacturing an integral hinge body using extrusion/pultrusion moulding).

The method may include manufacturing each of the ramp connectors (e.g. by integrally manufacturing respective the portions of each of the ramp connectors).

The method may include manufacturing the ramp panels and/or the hinge body and/or the ramp connectors by extrusion/pultrusion moulding. The method may include manufacturing kerbs (e.g. by extrusion/pultrusion moulding) for connection to the ramp panels. Additionally or alternatively, the method may include fitting a kerb onto an outer transverse edge of each ramp panel, the outer edge being transversely spaced from the inner transverse edge. For example, this may include connecting the respective outer transverse edge to a kerb connector of the respective kerb, e.g. by inserting the outer transverse edge into a respective longitudinally-extending recess. Alternatively, the method may include integrally forming the kerbs with the ramp panels, e.g. by extrusion moulding.

The method may comprise a step of fitting a handle to a handle holder connected (including integrally) to the hinge system (e.g. stabiliser portion). For example, this may involve inserting handle webs (as described above for the third aspect) into a gripping portion of the handle holder and securing them therein, e.g. by crimping.

The method may include fitting lip portions to longitudinally spaced lateral ends of each of the ramp panels. For example, this may include inserting the lateral ends of the ramp panels into respective lip recesses of the lip portions. Alternatively, the method may include integrally manufacturing the lip portions with the ramp panels. The lip portions may be inclined with respect to the planes of the ramp panels, such that in use, the lip portion extend downwards in a depth direction.

### DESCRIPTION OF DRAWINGS

Embodiments of the disclosure are set out below in detail, with reference to the accompanying drawings, in which:
Fig. 1 is a front sectional view of a hinge system according to the first aspect;
Fig. 2 is a front sectional view of the hinge system of Fig. 1 in an unfolded configuration;
Fig. 3 is a front sectional view of the hinge system of Fig. 1 in a folded configuration; and
Fig. 4 is a perspective view of a foldable ramp comprising a hinge system according to the first aspect.

### DETAILED DESCRIPTION

The following detailed description of the present disclosure is made by way of example.

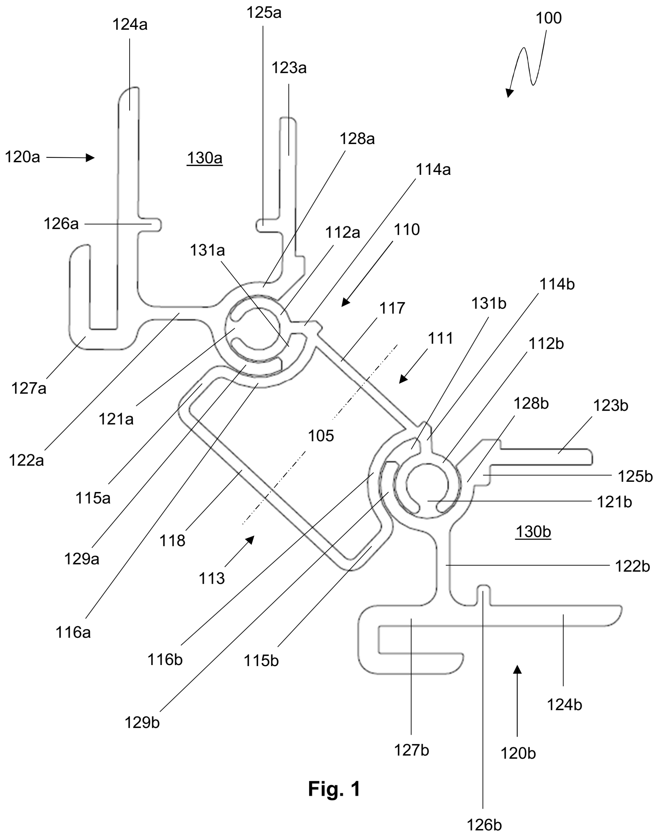

Figs. 1 to 3 show a hinge system 100 for a foldable ramp. The hinge system 100 comprises a hinge body 110, a first ramp connector 120a and a second ramp connector 120b that each extend in the longitudinal direction (into the page).

The hinge body 110 comprises a bridge portion 111 interposed between a first hinge element 112a and a second hinge element 112b. The hinge body 110 further comprises a stabiliser portion 113 depending from the bridge portion 111. The stabiliser portion 113 comprises a first stabiliser element 115a and a second stabiliser element 115b.

The bridge portion 111 comprises a first planar connector portion 114a connected to the first hinge element 112a and a second planar connector portion 114b connected to the second hinge element 112b. The bridge portion 111 also comprises a planar central portion 117 interposed between the first connector portion 114a and the second connector portion 114b.

The first ramp connector 120a is integrally formed and comprises a first channel 121a, a first engagement portion 122a, a first upper portion 123a, a first lower portion 124a, a lower part 127a of the first engagement portion 122a, a first channel inner wall 128a and a first channel outer wall 129a.

The second ramp connector 120b is integrally formed and comprises a second channel 121b, a second engagement portion 122b, a first upper portion 123b, a second lower portion 124b, a lower part 127b of the second engagement portion 122b, a second channel inner wall 128b and a second channel outer wall 129b.

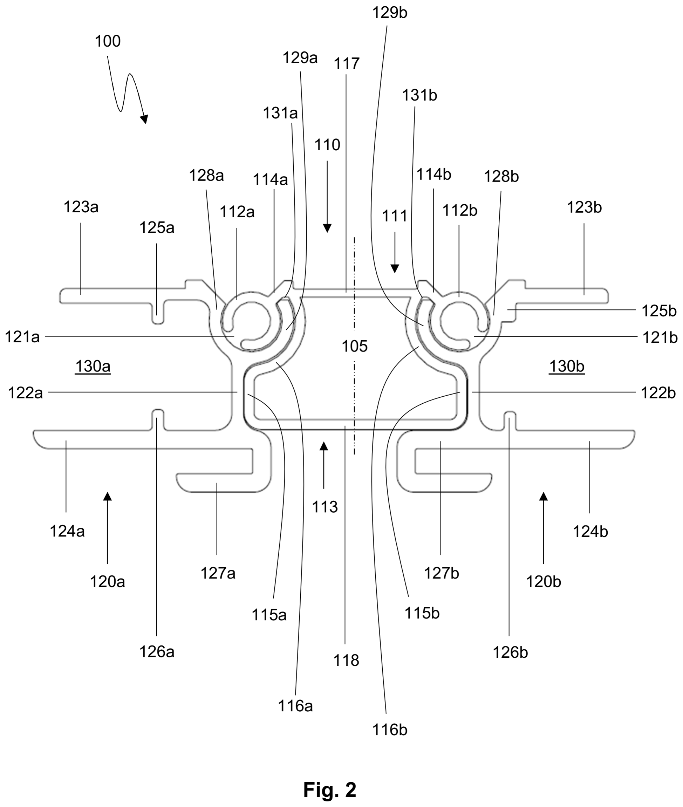

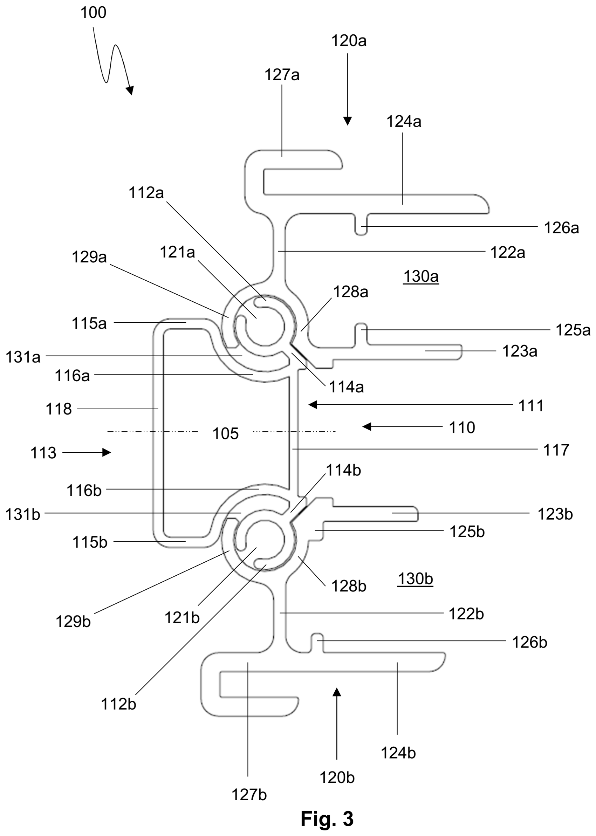

The hinge body 110 is interposed between the ramp connectors 120a, 120b with the first hinge element 112a pivotably received in the first channel 121a and the second hinge element 112b pivotably received in the second channel 121b such that the hinge system 100 is pivotable between an unfolded configuration shown in Fig. 2 and a folded configuration shown in Fig. 3.

Fig. 1 shows the hinge system 100 transitioning between the folded and unfolded configurations, Fig. 2 shows the hinge system 100 in the unfolded configuration and Fig. 3 shows the hinge system 100 in the folded configuration.

In the unfolded configuration, as shown in Fig. 2, the first stabiliser element 115a engages with the first engagement portion 122a and the second stabiliser element 115b engages with the second engagement portion 122b to restrict relative translational up/down movement of the ramp connectors 120a, 120b.

The hinge system 100 is elongate such that the hinge system 100 has a longitudinal axis. The hinge body 110 include a central plane 105 aligned with the longitudinal axis and orientated such that the hinge elements 112a, 112b are on opposing sides of the central plane 105. The hinge body 110 is symmetric about the central plane 105. The hinge body 110 and each ramp connector 120a, 120b is extruded in the longitudinal direction (into the page).

The first engagement portion 122a is adjacent the first channel 121a. The first engagement portion 122a comprises a first concave recess and the first stabiliser element 115a comprises a first convex protrusion. The first recess and the first protrusion have matching profiles in the transverse direction (i.e. perpendicular to the central plane 105). Thus, in the unfolded configuration, the first convex protrusion conforms to and engages with the first concave recess to restrict translational movement (e.g. up/down movement in use) of the first ramp connector 120a.

The second engagement portion 122b is adjacent the second channel 121b. The second engagement portion 122b comprise a second concave recess and the second stabiliser element 115b comprises a second convex protrusion. The second recess and the second protrusion have matching profiles in the transverse direction (i.e. perpendicular to the central plane 105). Thus, in the unfolded configuration, the second convex protrusion conforms to and engages with the second concave recess to restrict translational movement (e.g. up/down movement in use) of the second ramp connector 120b.

The stabiliser portion comprises a first spacer portion 116a that is arcuate and a second spacer portion 116b that is arcuate. The first spacer portion 116a is transversely spaced from the second spacer portion 116b (e.g. on opposite sides of the central plane 105). The first spacer portion 116a is interposed between and connects the bridge portion 111 and the first stabiliser element 115a. The second spacer portion 116b is interposed between and connects the bridge portion 111 and the second stabiliser element 115b. The first spacer portion 116a is recessed towards the central plane 105 relative to the first stabiliser portion 115a. The second spacer portion 116b is recessed towards the central plane 105 relative to the second stabiliser portion 115b.

The first channel outer wall 129a and the first channel inner wall 128a collectively define the first channel 121a. The first channel outer wall 129a and the first channel inner wall 128a are both arcuate and integrally formed with the first engagement portion 122a. The second channel outer wall 129b and the second channel inner wall 128b collectively define the second channel 121b. The second channel outer wall 129b and the second channel inner wall 128b are both arcuate and integrally formed with the second engagement portion 122b.

In the unfolded configuration, the first channel outer wall 129a engages with and conforms to the first spacer portion 116a. In the unfolded configuration, the second channel outer wall 129b engages with and conforms to the second spacer portion 116b.

The first spacer portion 116a, the first hinge element 112a and the first connector portion 114a define a first arcuate cavity 131a for receiving the first channel outer wall 129a. In the unfolded configuration, the first channel outer wall 129a conforms to and abuts the first cavity 131a. The second spacer portion 116b, the second hinge element 112b and the second connector portion 114b define a second arcuate cavity 131b for receiving the second channel outer wall 129b. In the unfolded configuration, the second channel outer wall 129b conforms to and abuts the second cavity 131b.

The stabiliser portion 113 comprises a base portion 118 interposed between and connecting the first stabiliser element 115a and the second stabiliser element 115b distal the bridge portion 111. Thus, the base portion 118 opposes the bridge portion 111.

In the unfolded configuration, the lower part 127b of the second engagement portion 122b engages with the base portion 118 to further stabilise the second ramp connector 120b.

In the unfolded configuration, a first side of the stabiliser portion 113 engages with and conforms to the first ramp connector 120a from the bridge portion 111 to the base portion 118 on a first side of the hinge body 110 via continuous contact and abutment. In the unfolded configuration, a second side of the stabiliser portion 113 conforms to and engages with the second ramp connector 120b from the bridge portion 111 to the base portion 118 on a second side of the hinge body 110 via continuous contact and abutment.

The first ramp connector 120a comprises a first slot 130a for receiving a first ramp panel. The second ramp connector 120b comprise a second slot 130b for receiving a second ramp panel. In the unfolded configuration, the ramp connectors 120a, 120b are orientated such that the first slot 130a and the second slot 130b open in opposite directions such that, in use, a first ramp panel, a second ramp panel and the central portion 117 would be coplanar.

In the folded configuration, the ramp connectors 120a, 120b are orientated such that the first slot 130a and the second slot open 130b in the same direction such that, in use, the first ramp panel and the second ramp panel face each other. The first ramp panel may be integrally formed with the first ramp connector 120a. The second ramp panel may be integrally formed with the second ramp connector 120b.

The first slot comprises a first stopping element to limit the degree of insertion of the first ramp panel into the first slot 130a. The first stopping element comprises a first upper stopping rib 125a on an upper first slot-defining surface and a first lower stopping rib 126a on a lower first slot-defining surface. The second slot 130b comprises a second stopping element to limit the degree of insertion of the second ramp panel into the second slot 130b. The second stopping element comprises a second upper stopping rib 125b on an upper second slot-defining surface and a second lower stopping rib 126b on a lower second slot-defining surface. The second upper stopping rib 125b is integrally formed with the second channel inner wall 128b.

A first offset between the first stopping element and the first engagement portion 122a is different to a second offset between the second stopping element and the second engagement portion 122b to allow nesting of the ramp panels in the folded configuration in use.

The stabiliser portion 113 has a depth dimension in a direction perpendicular to the longitudinal and transverse extension of the hinge body 110 that is less than the depth dimension of each ramp connector 120a, 120b so that the stabiliser portion 113 is entirely within a space defined between the ramp connectors 120a, 120b.

The first stabiliser 115a element extends beyond the bridge portion 111 in a first transverse direction away from and perpendicular to the central plane 105. The second stabiliser element 115b extends beyond the bridge portion 110 in a second transverse direction away from and perpendicular to the central plane 105. The first transverse direction and the second transverse direction are opposite to one another such that they are mirrored about the central plane 105.

The first hinge element 112a comprises a first hollow barrel. The second hinge element 112b comprises a second hollow barrel. The hollow barrels have the same diameter. The first connector portion 114a connects to the first hinge element 112a normal to the outer surface of the first barrel. The second connector portion 114b connects to the second hinge element 112b normal to a surface of the second barrel.

The first connector portion 114a depends downwardly and outwardly from the planar central portion 117 towards the first stabiliser element 115a at a first obtuse angle of approximately 135 degrees. The second connector portion 114b depends downwardly and outwardly from the central portion 117 towards the second stabiliser element 115b at a second obtuse angle of approximately 135 degrees. Thus, the first obtuse angle and the second obtuse angle are substantially the same.

The first channel inner wall 128a comprises a first planar abutment portion. In the folded configuration, the first planar abutment portion abuts an upper surface of the first connector portion 114a. The second channel inner wall 128b comprises a second planar abutment portion. In the folded configuration, the second planar abutment portion abuts an upper surface of the second connector portion 114b.

The first ramp connector 120a comprises a first planar upper portion 123a and a first planar lower portion 124a. The first upper portion 123a and the first lower portion 124a are substantially parallel to each other. The first upper portion 123a, the first channel inner wall 128a, the first engagement portion 122a and the first lower portion 124a collectively define the first slot 130a and are integrally formed. The first channel inner wall 128a is interposed between the first upper portion 123a and the first engagement portion 122a. In use, the first upper portion 123a abuts an upper surface of the first ramp panel and the first lower portion 124a abuts a lower surface of the first ramp panel.

The second ramp connector 120b comprises a second upper portion 123b and a second planar lower portion 124b. The second upper portion 123b and the second lower portion 124b are substantially parallel to each other. The second upper portion 123b, the second channel inner wall 128b, the second engagement portion 122b and the second lower portion 124b collectively define the second slot 130b and are integrally formed. The second channel inner wall 128b is interposed between the second upper portion 123b and the second engagement portion 122b. In use, the second upper portion 123b abuts an upper surface of the second ramp panel and the second lower portion 124b abuts a lower surface of the second ramp panel.

In the unfolded configuration, the first upper portion 123a and the second upper portion 123b are both coplanar with one another and are also coplanar the central portion 117 of the hinge body 110.

The first channel 121a comprises a first channel opening. The first channel opening has a transverse dimension smaller than the diameter of the first channel 121a to retain the first hinge element 112a in the first channel 121a. The second channel 121b comprises a second channel opening. The second channel opening has a transverse dimension smaller than the diameter of the second channel 121b to retain the second hinge element 112b in the second channel 121b. The first channel opening and the second channel opening are coplanar. A diameter of the first hinge element 112a is greater than the transverse dimension of the first channel opening. A diameter of the second hinge element 112b is greater than the transverse dimension of the second channel opening. The hinge elements 112a, 112b have respective axial lengths (into the page) that substantially match the axial lengths (into the page) of their respective channels 121a, 121b.

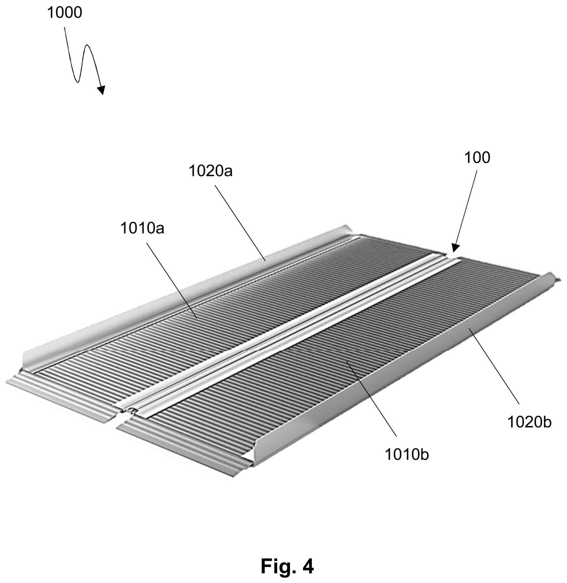

Fig. 4 shows a foldable ramp 1000 including the hinge system 100 described above with reference to Figs. 1 to 3. The foldable ramp 1000 comprises a first ramp panel 1010a, a second ramp panel 1010b and the hinge system 100. In Fig. 4, the hinge system 100 is in the unfolded configuration such that the foldable ramp 1000 is unfolded and thereby traversable by a user.

The ramp panels 1010a, 1010b each have a respective inner transverse edge, a respective outer transverse edge, and respective longitudinally spaced lateral ends. The ramp panels 1010a, 1010b further have respective first and second ramp surfaces over which the user travels in use. The hinge system 100 is interposed between the respective inner transverse edges of the ramp panels such that the first ramp panel 1010a is received in the first slot 130a of the hinge system 100 and the second ramp panel 1010b is received in the second slot 130b of the hinge system 100.

The foldable ramp 1000 further comprises a first kerb 1020a and a second kerb 1020b. The first kerb 1020a is attached to the outer transverse edge of the first ramp panel 1010a and the second kerb 1020b is attached to the outer transverse edge of the second ramp panel 1010b.

Throughout this specification, including the claims which follow, unless the context requires otherwise, the words "have", "comprise", and "include", and variations such as "having", "comprises", "comprising", and "including" will be understood to imply the inclusion of a stated integer or step or group of integers or steps but not the exclusion of any other integer or step or group of integers or steps.

It must be noted that, as used in the specification and the appended claims, the singular forms "a", "an", and "the" include plural referents unless the context clearly dictates otherwise. Ranges may be expressed herein as from "about" one particular value, and/or to "about" another particular value. When such a range is expressed, another embodiment includes from the one particular value and/or to the other particular value. Similarly, when values are expressed as approximations, by the use of the antecedent "about," it will be understood that the particular value forms another embodiment. The term "about" in relation to a numerical value is optional and means, for example, ±10%.

The words "preferred" and "preferably" are used herein refer to embodiments of the invention that may provide certain benefits under some circumstances. It is to be appreciated, however, that other embodiments may also be preferred under the same or different circumstances. The recitation of one or more preferred embodiments therefore does not mean or imply that other embodiments are not useful, and is not intended to exclude other embodiments from the scope of the disclosure, or from the scope of the claims.

## Claims

1. A hinge system for a foldable ramp, the hinge system comprising:
a hinge body comprising a first hinge element, a second hinge element and a bridge portion interposed between the hinge elements;
a first ramp connector comprising a first channel and a first engagement portion; and
a second ramp connector comprising a second channel and a second engagement portion;
wherein the hinge body is interposed between the ramp connectors with the first hinge element pivotably received in the first channel and the second hinge element pivotably received in the second channel such that the hinge system is pivotable between an unfolded configuration and a folded configuration;
wherein the hinge body further comprises a stabiliser portion depending from the bridge portion, the stabiliser portion comprising a first stabiliser element and a second stabiliser element such that, in the unfolded configuration, the first stabiliser element engages with the first engagement portion and the second stabiliser element engages with the second engagement portion to restrict relative translational movement of the ramp connectors.

2. The hinge system of claim 1, wherein the first stabiliser element includes an upper part and a lower part such that, in the unfolded configuration, the upper part engages the first engagement portion proximal the first hinge element and the lower part engages the first engagement portion distal the first hinge element and/or the second stabiliser element includes an upper part and a lower part such that, in the unfolded configuration, the upper part engages the second engagement portion proximal the second hinge element and the lower part engages the second engagement portion distal the second hinge element.

3. The hinge system of claim 1 or 2, wherein, in the unfolded configuration, the first engagement portion conforms to the first stabiliser element and the second engagement portion conforms to the second stabiliser element.

4. The hinge system of any preceding claim, wherein the first stabiliser element is convex or concave and the first engagement portion is the other of convex or concave such that, in the unfolded configuration, the first stabiliser element engages with the first engagement portion and/or wherein the second stabiliser element is convex or concave and the second engagement portion is the other of convex or concave such that, in the unfolded configuration, the second stabiliser element engages with the second engagement portion.

5. The hinge system of any preceding claim, wherein the stabiliser portion comprises a base portion, the first engagement portion comprises a lower part, and/or the second engagement portion comprises a lower part such that, in the unfolded configuration, the lower part(s) engage with the base portion to further restrict translation movement between the first and second ramp connectors.

6. The hinge system of any preceding claim, wherein the first ramp connector comprises a first slot for receiving a first ramp panel and the second ramp connector comprises a second slot for receiving a second ramp panel, optionally, wherein the first slot comprises a first stopping element to limit the degree of insertion of a first ramp panel into the first slot and the second slot comprises a second stopping element to limit the degree of insertion of the second ramp panel into the second slot.

7. The hinge system of claim 6, wherein a first offset between the first stopping element and the first engagement portion is different to a second offset between the second stopping element and the second engagement portion.

8. The hinge system of any preceding claim, wherein the first ramp connector comprises a first channel outer wall partly defining the first channel and the second ramp connector comprises a second channel outer wall partly defining the second channel.

9. The hinge system of claim 8, wherein, in the unfolded configuration, the first channel outer wall conforms to and engages the stabiliser portion and the second channel outer wall conforms to and engages the stabiliser portion and optionally, wherein the first channel outer wall is arcuate and the second channel outer wall is arcuate.

10. The hinge system of any preceding claim, wherein the bridge portion comprises a central portion interposed between a first connector portion connected to the first hinge element and a second connector portion connected to the second hinge element, each connector portion depending downwardly from the central portion towards the respective stabiliser element.

11. The hinge system of any preceding claim, wherein the first stabiliser element extends beyond the bridge portion in a first transverse direction and the second stabiliser element extends beyond the bridge portion in a second transverse direction, the first and second transverse directions being opposite to each other.

12. The hinge system of any preceding claim, wherein the bridge portion, the first stabiliser element and the second stabiliser element are integrally formed.

13. A foldable ramp comprising:
a first ramp panel having an inner transverse edge;
a second ramp panel having an inner transverse edge; and
a hinge system according to any one of the preceding claims interposed between the inner transverse edges of the first and second ramp panels with the inner channel of the first ramp connector connected to or integral with the first ramp panel and the second inner channel of the second ramp connector connected to or integral with the second ramp panel.

14. The foldable ramp according to claim 13 further comprising a first kerb and a second kerb each comprising a respective kerb portion and a respective kerb connector, wherein each kerb connector comprises a respective longitudinally-extending kerb recess for receiving an outer transverse edge of the respective ramp panel.

15. A method of manufacturing the foldable ramp of claim 13 or 14, the method comprising the steps of:
manufacturing the first ramp panel having a first transverse dimension;
manufacturing the second ramp panel having a second transverse dimension, the second transverse dimension being equal to the first transverse dimension;
providing the hinge system of any one of claims 1 to 15;
fitting the inner transverse edge of the first ramp panel into a first recess of the first ramp connector;
fitting the inner transverse edge of second ramp panel into a second recess of the second ramp connector;
fitting the first hinge element into the first channel of the first ramp connector; and
fitting the second hinge element into the second channel of the second ramp connector, wherein the first ramp panel and the second ramp panels are optionally manufactured by extrusion moulding through the same extrusion die.
